# EUROPEAN PATENT APPLICATION

(11) **EP 4 617 817 A1**
(43) Date of publication of application: **17.09.2025**
(21) Application number: 24747164.2
(22) Date of filing: 16.01.2024
(51) Int. Cl.: G05D 1/46, B64C 27/04, B64U 10/13, B64U 10/17

(54) **LANDING ASSESSMENT CONTROL SYSTEM, AIRCRAFT, AND LANDING ASSESSMENT METHOD**

(30) Priority: 23.01.2023 JP 2023008333
(71) Applicant: Mitsubishi Heavy Industries, Ltd., Tokyo 100-8332 (JP)
(72) Inventor: KOJIMA, Toru, Tokyo 100-8332 (JP); MORI, Satoshi, Tokyo 100-8332 (JP)
(74) Representative: Hoffmann Eitle
(86) International application number: PCT/JP2024/000904
(87) International publication number: WO 2024/157833

(57) **Abstract**

A landing assessment control system for assessing whether it is possible for an aircraft to land at a target landing point, the landing assessment control system comprising a control unit that assesses whether a landing is possible by using a parameter for estimating the landing performance of the aircraft, and the control unit executing: a step for acquiring action responses of the aircraft, which acts due to input of action signals to the aircraft; and a step for estimating the landing performance of the aircraft on the basis of the parameter relating to the acquired action responses and assessing whether the landing is possible on the basis of the result of estimation.

## Description

### Technical Field

The present disclosure relates to a landing determination control system, an aircraft, and a landing determination method.

### Background Art

In the related art, a technique for guiding a vertical takeoff and landing aircraft to a landing target point is known. For example, PTL 1 discloses an automatic takeoff/landing system that calculates a positional relationship between a takeoff/landing target and a flying object based on an image of the takeoff/landing target acquired by an imaging device mounted on the flying object, and controls takeoff/landing of the flying object based on a calculation result.

### Citation List

### Patent Literature

[PTL 1] Japanese Unexamined Patent Application Publication No. 2012-071645

### Summary of Invention

### Technical Problem

Incidentally, in a case where an aircraft such as a vertical takeoff and landing aircraft is automatically guided to a landing target point, it is necessary to evaluate whether or not the aircraft has landing performance. In a case of performing such an evaluation, an inflight performance monitor (IFPM) that diagnoses a failure of a drive system and a flight control system of an aircraft is used.

A pilot who pilots an aircraft determines whether or not the aircraft can perform deck-landing (landing) on the ship from both a failure diagnosis result diagnosed by the IFPM and an operation response of the airframe with respect to steering. However, since the determination of whether or not the aircraft can perform deck-landing depends on the determination of the pilot, it is difficult to accurately determine the deck-landing of the aircraft.

Therefore, an object of the present disclosure is to provide a landing determination control system, an aircraft, and a landing determination method with which it is possible to accurately determine landing feasibility of the aircraft.

### Solution to Problem

According to the present disclosure, there is provided a landing determination control system that determines landing feasibility of an aircraft on a target landing point, the system including a control unit that determines the landing feasibility using a parameter for estimating landing performance of the aircraft, in which the control unit executes a step of acquiring an operation response of the aircraft that is operated by inputting an operation signal to the aircraft, and a step of estimating the landing performance of the aircraft based on the parameter relating to the acquired operation response and determining the landing feasibility based on an estimation result.

According to the present disclosure, there is provided an aircraft including at least a part of the landing determination control system described above, and executes a flight operation based on a determination result of the landing feasibility.

According to the present disclosure, there is provided a landing determination method executed by a landing determination control system that determines landing feasibility of an aircraft on a target landing point, in which a parameter for estimating landing performance of the aircraft is used, the method including a step of acquiring an operation response of the aircraft that is operated by inputting an operation signal to the aircraft, and a step of estimating the landing performance of the aircraft based on the parameter relating to the acquired operation response and determining the landing feasibility based on an estimation result.

### Advantageous Effects of Invention

According to the present disclosure, it is possible to accurately determine the landing feasibility of the aircraft.

### Brief Description of Drawings

Fig. 1 is a schematic configuration diagram showing an example of a landing determination control system of an aircraft according to the present embodiment.
Fig. 2 is an explanatory diagram relating to the landing determination control of an aircraft according to the present embodiment.
Fig. 3 is a flowchart relating to a landing determination method for an aircraft according to the present embodiment.

### Description of Embodiments

Embodiments according to the present disclosure will be described in detail below with reference to the drawings. Note that this disclosure is not limited to the embodiment. In addition, components in the following embodiment include those that can be easily replaced by those skilled in the art or those that are substantially the same. Further, the components described below can be combined as appropriate, and in a case where there are a plurality of embodiments, the embodiments can also be combined.

### [Present Embodiment]

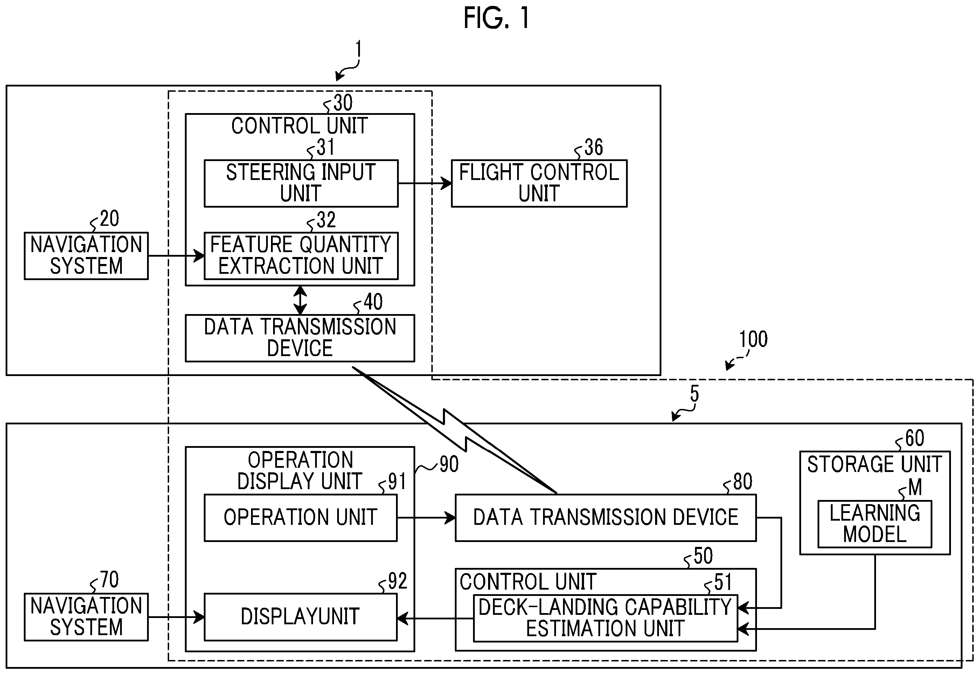

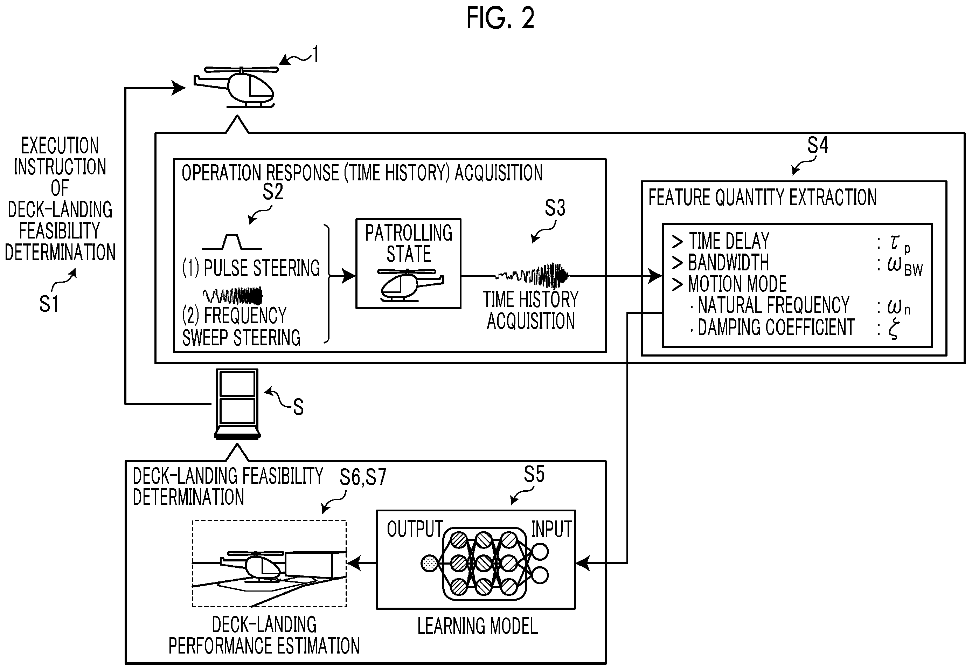

Fig. 1 is a schematic configuration diagram showing an example of a landing determination control system of an aircraft according to the present embodiment. Fig. 2 is an explanatory diagram relating to the landing determination control of the aircraft according to the present embodiment.

As shown in Figs. 1 and 2, the aircraft 1 is a flying object (for example, a helicopter, a drone, or the like) as a rotary wing aircraft. In the present embodiment, the aircraft 1 is an unmanned vehicle. The aircraft 1 may be any flying object capable of moving forward, moving rearward, moving laterally, turning, and hovering, and may be a manned aircraft. The aircraft 1 is equipped with a part of the landing determination control system 100, and the landing determination control system 100 executes the landing determination, and the aircraft 1 lands on the ship 5 that is the target landing point. The landing may include landing on the deck of the ship 5 and landing on the ground. In addition, in the present embodiment, the aircraft 1 automatically lands on the deck as a form of the deck-landing. The form of the deck-landing may be a form in which the aircraft 1 is landed on the deck by a steering input by a person. Hereinafter, in the present embodiment, a case where the aircraft 1 automatically lands on the deck of the ship 5 will be described.

### (Landing Determination Control System)

The landing determination control system 100 according to the present embodiment is a system that determines whether or not the aircraft 1 can land on the deck of the ship 5 in order to land the aircraft 1 in flight on the deck of the ship 5. The landing determination control system 100 is mounted on the aircraft 1 and the ship 5. As shown in Fig. 1, the aircraft 1 includes a navigation system 20, a control unit 30, a flight control unit 36, and a data transmission device 40. In addition, the ship 5 includes a control unit 50, a storage unit 60, a navigation system 70, a data transmission device 80, and an operation display unit 90. Then, the landing determination control system 100 includes the control unit 30 and the data transmission device 40 in the aircraft 1, and includes the control unit 50, the storage unit 60, the data transmission device 80, and the operation display unit 90 in the ship 5. That is, in the landing determination control system 100, the plurality of control units 30 and 50 cooperate with each other to perform the determination of the deck-landing feasibility.

### (Ship)

As shown in Fig. 1, the ship 5 includes a control unit 50, a storage unit 60, a navigation system 70, a data transmission device 80, and an operation display unit 90.

The navigation system 70 is, for example, an inertial navigation system (INS) and acquires attitude angles in a pitch direction and a roll direction, a ship heading, a speed, an acceleration, position coordinates in the earth coordinate system, and the like of the ship 5. In the present embodiment, the navigation system 70 is described as being applied to the inertial navigation system, but is not particularly limited, and any navigation system 70 may be used. In addition, in the present embodiment, the navigation system 70 is an inertial navigation system including a global positioning system (GPS) as a position measurement unit in order to improve the measurement accuracy of the position. In the present embodiment, the inertial navigation system including the GPS is applied and described. However, the present disclosure is not particularly limited to the GPS, and any position measurement unit capable of accurately measuring a position may be used. For example, a quasi-zenith satellite system may be used, and a configuration in which the position measurement unit such as the GPS is omitted may be used as long as the position can be accurately measured only by the navigation system 70. In addition, the navigation system 70 may acquire at least a part of various types of data by a sensor.

The data transmission device 80 is included in the landing determination control system 100, and exchanges various signals with the data transmission device 40 mounted on the aircraft 1 via radio communication.

The operation display unit 90 is a user interface through which an operator who is a crew member of the ship 5 grasps a control status and inputs various instructions. The operation display unit 90 includes an operation unit 91 and a display unit 92. The operation unit 91 is an input interface such as a keyboard and a touch panel, and outputs an execution instruction for the deck-landing feasibility determination, which will be described later, as various instructions. The display unit 92 is an output interface such as a display, and displays the evaluation result of the deck-landing feasibility determination, which will be described later. The instruction input in the operation display unit 90 is transmitted from the data transmission device 80 to the data transmission device 40. In addition, the control status of the aircraft 1 is transmitted from the data transmission device 40 to the data transmission device 80. That is, the data transmission device 40 and the data transmission device 80 can perform bidirectional communication.

The control unit 50 includes, for example, an integrated circuit such as a central processing unit (CPU). The control unit 50 estimates the deck-landing capability of the aircraft 1 based on the input data or outputs the estimation result to the display unit 92 as an evaluation result. The storage unit 60 is any storage device such as a semiconductor storage device or a magnetic storage device. The storage unit 60 stores a learning model M for estimating the deck-landing capability of the aircraft 1. The learning model M is, for example, a trained learning model trained by deep learning using training data.

In addition, the control unit 50 includes a deck-landing capability estimation unit 51. The deck-landing capability estimation unit 51 estimates the deck-landing capability of the aircraft 1 by using the learning model M stored in the storage unit 60 with the feature quantity (to be described later) as an input parameter.

### (Aircraft)

As shown in Fig. 1, the aircraft 1 includes a navigation system 20, a control unit 30, a flight control unit 36, and a data transmission device 40.

The navigation system 20 is, for example, an inertial navigation system (INS), as in the navigation system 70. The navigation system 20 may be an inertial navigation system including a position measurement unit such as GPS, as in the navigation system 70, or may be an inertial navigation system excluding a position measurement unit such as GPS, and is not particularly limited.

The navigation system 20 including the GPS acquires the attitude angles of the aircraft 1 in the roll direction, the yaw direction, and the pitch direction, the airframe speed, the inertial speed, the airframe acceleration, the aircraft heading, the position coordinates in the earth coordinate system, and the like of the aircraft 1. The navigation system 20 may include an attitude angle sensor that detects an attitude angle of the aircraft 1, a speed sensor that detects an airframe speed of the aircraft 1, an acceleration sensor that detects an airframe acceleration of the aircraft 1, and a sensor that detects an aircraft heading of the aircraft 1. The navigation system 20 outputs the acquired attitude angle, airframe speed, inertial speed, airframe acceleration, aircraft heading, and position coordinates of the aircraft 1 to the flight control unit 36.

The control unit 30 includes, for example, an integrated circuit such as a central processing unit (CPU). The control unit 30 performs a steering input for causing the aircraft 1 to execute a predetermined flight operation or extracts a feature quantity based on an operation response of the aircraft 1. The control unit 30 includes a steering input unit 31 and a feature quantity extraction unit 32.

The steering input unit 31 executes a predetermined steering input in estimating the deck-landing capability of the aircraft 1. Specifically, the steering input unit 31 outputs, as a steering input for estimating the deck-landing capability of the aircraft 1, a steering input related to pulse steering and a steering input related to frequency sweep steering as operation signals to the flight control unit 36. The steering input may be at least one of a steering input related to pulse steering and a steering input related to frequency sweep steering as long as the deck-landing capability can be estimated.

The feature quantity extraction unit 32 executes processing for extracting a feature quantity from the operation response of the aircraft 1 acquired by the navigation system 20. As the operation response, a time history of the flight operation of the aircraft 1 is acquired as a parameter related to the operation response. The feature quantity is an input parameter input to the learning model M. Specifically, the feature quantity includes a response time delay τ_{P} of the attitude of the aircraft 1 with respect to the steering input (operation signal), a bandwidth ω_{BW} of the frequency response of the aircraft 1 with respect to the steering input, a natural frequency ωₙ of the frequency response of the aircraft 1 with respect to the steering input, and a damping coefficient ζ of the frequency response of the aircraft 1 with respect to the steering input. These feature quantities are used for a maneuverability evaluation criterion or the like.

The flight control unit 36 controls each part of the aircraft 1 to fly the aircraft 1. The flight control unit 36 controls the blade pitch angle, the rotation speed, and the like of each rotary wing according to the control amount corresponding to the steering input, and adjusts the airframe speed, the attitude angle, the rate of the attitude angle, and the like of the aircraft 1. Accordingly, the aircraft 1 lands on the deck of the ship 5. In the present embodiment, the control unit 30 and the flight control unit 36 are described as separate functional units. However, the control unit 30 and the flight control unit 36 may be a single functional unit.

The data transmission device 40 exchanges various signals with the data transmission device 80 mounted on the ship 5 via radio communication.

### (Landing Determination Method)

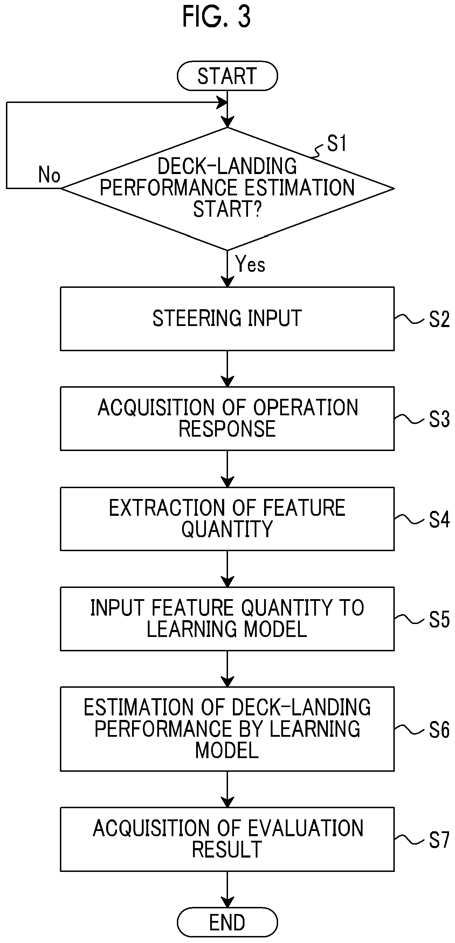

Next, a landing determination method for the aircraft 1 according to the present embodiment will be described with reference to Figs. 2 and 3. Fig. 3 is a flowchart relating to the aircraft landing determination method according to the present embodiment. Hereinafter, a landing determination method in a case where the aircraft 1 automatically lands on the deck will be described.

In the landing determination method, first, in the landing determination control system 100, it is determined whether or not to start the deck-landing performance estimation (step S1). In step S1, the control unit 30 of the aircraft 1 determines whether or not to start the deck-landing performance estimation, based on whether or not the control unit 30 has acquired the start signal relating to the execution instruction of the deck-landing feasibility determination output from the operation unit 91 of the ship 5. In step S1, when the start signal of the deck-landing feasibility determination is output from the operation unit 91 of the ship 5, the start signal is output from the data transmission device 80 toward the aircraft 1. In step S1, when the control unit 30 of the aircraft 1 acquires the start signal via the data transmission device 40, it is determined that the deck-landing performance estimation is to be started (step S1: Yes). On the other hand, in step S1, in a case where the control unit 30 of the aircraft 1 does not acquire the start signal, it is determined that the deck-landing performance estimation is not started (step S1: No). That is, the control unit 30 of the aircraft 1 repeatedly executes step S1 until the start signal is acquired.

Subsequently, in the landing determination method, when the control unit 30 of the aircraft 1 acquires the start signal, steps S2 to S3 of inputting the operation signal to the aircraft 1 and acquiring the operation response of the aircraft 1 are executed. Specifically, when the control unit 30 of the aircraft 1 acquires the start signal, the steering input unit 31 of the control unit 30 executes the steering input regarding the pulse steering and the steering input regarding the frequency sweep steering toward the flight control unit 36 (step S2). In step S2, a steering input is executed in the cruising state of the aircraft 1. In step S2, as the steering input to be executed, at least one of a steering input regarding the pulse steering and a steering input regarding the frequency sweep steering may be used. In addition, in step S2, the steering input is executed in the cruising state of the aircraft 1. However, there is a case where the aircraft 1 enters the hovering state during a predetermined mission. Therefore, the steering input may be executed in the hovering state. Thereafter, the control unit 30 acquires a time history that is an operation response corresponding to pulse steering and a time history that is an operation response corresponding to frequency sweep steering from the navigation system 20 (step S3).

Thereafter, in the landing determination method, the control unit 30 of the aircraft 1 extracts a feature quantity relating to the operation response of the aircraft 1 based on the acquired operation response (step S4). In step S4, the response time delay τ_{P} and the bandwidth ω_{BW} are acquired as the feature quantities extracted from the time history obtained by the pulse steering. In addition, in step S4, the natural frequency ωₙ and the damping coefficient ζ are acquired as the feature quantities extracted from the time history obtained by the frequency sweep steering. The above-described feature quantity may be extracted from any one of the pulse steering and the frequency sweep steering as long as the feature quantity can be extracted.

In the landing determination method, when the control unit 30 of the aircraft 1 acquires the extracted feature quantity, the control unit 30 outputs the acquired feature quantity from the data transmission device 40 toward the ship 5. When the control unit 50 of the ship 5 acquires the feature quantity via the data transmission device 80, the control unit 50 inputs the acquired feature quantity to the learning model M to estimate the deck-landing performance of the aircraft 1, and executes steps S5 to S7 of determining the landing feasibility based on the estimation result. Specifically, when the control unit 50 of the ship 5 acquires the feature quantity, the deck-landing capability estimation unit 51 of the control unit 50 inputs the acquired feature quantity to the learning model M stored in the storage unit 60, using the acquired feature quantity as an input parameter (step S5). Then, the deck-landing capability estimation unit 51 acquires the deck-landing performance of the aircraft 1 as an estimation result output from the learning model M (step S6). Thereafter, the control unit 30 determines the deck-landing feasibility of the aircraft 1 based on the deck-landing performance of the aircraft 1, and acquires the determination result as an evaluation result (step S7). In step S7, the control unit 30 determines whether or not the aircraft 1 can land on the deck, including the sea state and the wind state, which are the external environment of the ship 5, in addition to the deck-landing performance of the aircraft 1. Then, the control unit 30 displays the acquired evaluation result of the deck-landing feasibility on the display unit 92.

**In** the present embodiment, the time history is acquired as the parameter relating to the operation response, the feature quantity is extracted from the time history, and then the feature quantity is used as the input parameter of the learning model M to estimate the deck-landing performance of the aircraft 1. However, the present disclosure is not particularly limited to this configuration. For example, the parameters related to the operation response may be evaluated as they are, that is, the time histories corresponding to the steering inputs may be evaluated, and after the evaluation results are aggregated, the deck-landing performance may be estimated by the learning model M using an estimation method such as a statistical method or a decision tree from the aggregated evaluation result.

**In** addition, in a case where the aircraft 1 automatically lands on the deck of the ship 5, when the control unit 30 of the aircraft 1 determines that the aircraft 1 can land on the deck of the ship 5 by the above-described landing determination method, the control unit 30 executes a flight operation of landing on the ship 5. On the other hand, in a case where the control unit 30 of the aircraft 1 determines that the aircraft 1 cannot land on the deck of the ship 5, for example, the control unit 30 may execute a flight operation of landing on a water surface without landing on the ship 5.

As described above, the landing determination control system 100 and the landing determination method according to the present embodiment are understood as follows, for example.

According to a first aspect, a landing determination control system 100 that determines landing feasibility of an aircraft 1 on a target landing point (ship 5), the system includes control units 30, 50 that determine the landing feasibility using a parameter for estimating landing performance of the aircraft 1, in which the control units 30, 50 execute steps S2 and S3 of acquiring an operation response of the aircraft 1 that is operated by inputting an operation signal to the aircraft 1, and steps S5 to S7 of estimating the landing performance of the aircraft based on the parameter relating to the acquired operation response and determining the landing feasibility based on an estimation result.

According to this configuration, since the parameter relating to the operation response of the aircraft 1 is used as the parameter for estimating the landing performance of the aircraft 1, the landing performance of the aircraft 1 can be accurately estimated, and thus it is possible to accurately determine the landing feasibility of the aircraft 1.

According to a second aspect, the landing determination control system 100 further includes a storage unit 60 that stores a learning model M for estimating the landing performance of the aircraft 1, in which the control units 30, 50 further execute step S4 of extracting a feature quantity relating to the operation response of the aircraft 1 based on the acquired parameter after executing steps S2 and S3 of acquiring the operation response, and in steps S5 to S7 of determining the landing feasibility, the control units input the extracted feature quantity to the learning model M to estimate the landing performance of the aircraft 1.

According to this configuration, the feature quantity extracted from the operation response of the aircraft 1 is used as the input parameter of the learning model M, so that the landing performance of the aircraft 1 can be more accurately estimated, and thus it is possible to accurately determine the landing feasibility of the aircraft 1.

According to a third aspect, in the landing determination control system 100 according to the aspect 1 or 2, in which in step S4 of extracting the feature quantity, a response time delay τ_{P} of an attitude of the aircraft 1 with respect to the operation signal, a bandwidth ω_{BW} of a frequency response of the aircraft 1 with respect to the operation signal, a natural frequency ωₙ of the frequency response of the aircraft 1 with respect to the operation signal, and a damping coefficient ζ of the frequency response of the aircraft 1 with respect to the operation signal are extracted as the feature quantity, and in steps S2 and S3 of acquiring the operation response, an operation signal related to at least one of pulse steering and frequency sweep steering is input as the operation signal in a cruising state of the aircraft 1.

According to this configuration, since the landing performance can be estimated by using the index such as the maneuverability evaluation criterion, a highly reliable determination can be made.

According to a fourth aspect, the landing determination control system 100 according to the first aspect further includes a storage unit 60 that stores a learning model M for estimating a landing performance of the aircraft 1, in which in steps S5 to S7 of determining the landing feasibility, the control units 30, 50 input the acquired parameter to the learning model M to estimate the landing performance of the aircraft 1.

According to this configuration, since the parameters such as the time history related to the operation response of the aircraft 1 can be used as the input parameters of the learning model M as they are, the load of the processing for estimating the landing performance of the aircraft 1 can be reduced.

According to a fifth aspect, the landing determination control system 100 according to any one of the first to fourth aspects further includes an operation unit 91 for performing the determination of the landing feasibility.

According to this configuration, it is possible to start the determination of the landing feasibility by operating the operation unit 91. The configuration is not limited to the operation of the operation unit 91, and the determination of the landing feasibility may be automatically executed when the return mode for returning to the ship 5 is executed.

The aircraft 1 according to a sixth aspect includes at least a part of the landing determination control system 100 described above, in which the aircraft 1 executes a flight operation based on a determination result of the landing feasibility.

According to this configuration, the flight operation of the aircraft 1 suitable for the determination result of the landing feasibility can be executed. For example, in a case where landing is possible, the aircraft 1 can perform a flight operation of landing on the ship 5. On the other hand, in a case where landing is not possible, the aircraft 1 can perform a flight operation of water landing on a water surface without landing on the ship 5.

According to a seventh aspect, a landing determination method executed by a landing determination control system 100 that determines landing feasibility of an aircraft 1 on a target landing point, in which a parameter for estimating landing performance of the aircraft 1 is used, the method includes steps S2 and S3 of acquiring an operation response of the aircraft 1 that is operated by inputting an operation signal to the aircraft 1, and steps S5 to S7 of estimating the landing performance of the aircraft 1 based on the parameter relating to the acquired operation response and determining the landing feasibility based on an estimation result.

According to this configuration, since the parameter relating to the operation response of the aircraft 1 is used as the parameter for estimating the landing performance of the aircraft 1, the landing performance of the aircraft 1 can be accurately estimated, and thus it is possible to accurately determine the landing feasibility of the aircraft 1.

### Reference Signs List

1: aircraft
5: ship
20: navigation system
30: control unit
31: steering input unit
32: feature quantity extraction unit
36: flight control unit
40: data transmission device
50: control unit
51: deck-landing capability estimation unit
60: storage unit
70: navigation system
80: data transmission device
90: operation display unit
91: operation unit
92: display unit
100: landing determination control system
M: learning model

## Claims

1. A landing determination control system that determines landing feasibility of an aircraft on a target landing point, the system comprising:
a control unit that determines the landing feasibility using a parameter for estimating landing performance of the aircraft,
wherein the control unit executes
a step of acquiring an operation response of the aircraft that is operated by inputting an operation signal to the aircraft, and
a step of estimating the landing performance of the aircraft based on the parameter relating to the acquired operation response and determining the landing feasibility based on an estimation result.

2. The landing determination control system according to claim 1, further comprising:
a storage unit that stores a learning model for estimating the landing performance of the aircraft,
wherein the control unit further executes a step of extracting a feature quantity relating to the operation response of the aircraft based on the acquired parameter after executing the step of acquiring the operation response, and
in the step of determining the landing feasibility, the control unit inputs the extracted feature quantity to the learning model to estimate the landing performance of the aircraft.

3. The landing determination control system according to claim 2,
wherein in the step of extracting the feature quantity, a response time delay of an attitude of the aircraft with respect to the operation signal, a bandwidth of a frequency response of the aircraft with respect to the operation signal, a natural frequency of the frequency response of the aircraft with respect to the operation signal, and a damping coefficient of the frequency response of the aircraft with respect to the operation signal are extracted as the feature quantity, and
in the step of acquiring the operation response, an operation signal related to at least one of pulse steering and frequency sweep steering is input as the operation signal in a cruising state of the aircraft.

4. The landing determination control system according to claim 1, further comprising:
a storage unit that stores a learning model for estimating a landing performance of the aircraft,
wherein in the step of determining the landing feasibility, the control unit inputs the acquired parameter to the learning model to estimate the landing performance of the aircraft.

5. The landing determination control system, according to claim 1, further comprising:
an operation unit for performing the determination of the landing feasibility.

6. An aircraft comprising:
at least a part of the landing determination control system according to any one of claims 1 to 5,
wherein the aircraft executes a flight operation based on a determination result of the landing feasibility.

7. A landing determination method executed by a landing determination control system that determines landing feasibility of an aircraft on a target landing point, in which a parameter for estimating landing performance of the aircraft is used, the method comprising:
a step of acquiring an operation response of the aircraft that is operated by inputting an operation signal to the aircraft; and
a step of estimating the landing performance of the aircraft based on the parameter relating to the acquired operation response and determining the landing feasibility based on an estimation result.
